# EUROPEAN PATENT SPECIFICATION

(11) **EP 4 653 852 B1**
(45) Date of publication and mention of the grant of the patent: **09.12.2026**
(21) Application number: 25169654.8
(22) Date of filing: 10.04.2025
(51) Int. Cl.: G01N 21/88, H01M 4/00

(54) **APPARATUS FOR DETECTING DEFECTS IN ANODES OR CATHODES FOR BATTERIES, AND PLANT COMPRISING SUCH APPARATUS**
VORRICHTUNG ZUR ERKENNUNG VON DEFEKTEN IN ANODEN ODER KATHODEN FÜR BATTERIEN UND ANLAGE MIT SOLCH EINER VORRICHTUNG
APPAREIL DE DÉTECTION DE DÉFAUTS DANS DES ANODES OU CATHODES POUR BATTERIES, ET INSTALLATION COMPRENANT UN TEL APPAREIL

(30) Priority: 23.05.2024 IT 202400011752
(43) Date of publication of application: 26.11.2025
(73) Proprietor: DeCoSystem S.r.l., 50041 Calenzano (IT)
(72) Inventor: LASTRUCCI, Tiziano, 50141 Firenze (IT)
(74) Representative: De Santis, Giovanni

(56) References cited:
- WO-A1-2023/237547
- DE-A1- 102019 120 858
- KAPELLER CHRISTIAN ET AL: "Photometric stereo-based high-speed inline battery electrode inspection", TM - TECHNISCHES MESSEN/PLATTFORM FÜR METHODEN, SYSTEME UND ANWENDUNGEN DER MESSTECHNIK, vol. 88, no. 7-8, 15 June 2021 (2021-06-15), DE, pages 423 - 432, XP093112268, ISSN: 0171-8096, DOI: 10.1515/teme-2021-0024

## Description

The present invention relates to an apparatus for detecting defects during the production of anodes and cathodes for batteries, and to a plant for the production of batteries, and/or of anodes and/or cathodes for batteries, comprising at least such apparatus.

As it is well known, in the last years the use of batteries has experienced a significant upsurge in several technical fields; e.g., in the automotive field, in which the development of electrically powered vehicles is constantly evolving and growing.

The production process of such batteries as a whole, as well as of the various components, especially of the electrodes, is particularly complex.

For example, the production of anodes and cathodes includes the use of a film of electrically conducing material, e.g., copper or aluminum, which is coated, on at least part of both of its principal faces, by an appropriate coating layer, made for example by graphite or by another similar material or in any case suitable for the purpose.

Clearly, this process, in its various steps, plays an important role to guarantee the effectiveness of the performances of the batteries and the competitiveness and success of the companies involved in their production, commercialization and application chains.

Indeed, any defects in the production of electrodes may not only cause undesired waste or production inefficiencies, but they can then lead to malfunctions in the apparatuses that use them, e.g., electrical vehicles, if not properly identified during the production stage.

Therefore, a scope of the present invention is to face and at least mitigate such problems, and in particular to provide a solution which allows to find any defects in the production of anodes and cathodes for batteries in a more effective way with respect to the current used solutions, or in any case to provide an effective solution alternative to known solutions.

Patent application WO 2023/237547 A1 discloses an inspection device for detecting defects during production of anodes and cathodes for batteries according to a prior art.

The scope of the invention which will become apparent from the following description is achieved by an apparatus for controlling and detecting defects in an anode or cathode for batteries, whose characteristics are defined in claim 1.

This scope and others which will become apparent in the following description are also achieved by a plant for producing batteries, and/or anodes and/or cathodes for batteries, characterized in comprising at least such apparatus.

Particular embodiments form the subject of dependent claims, whose content is intended as an integral part of the present description.

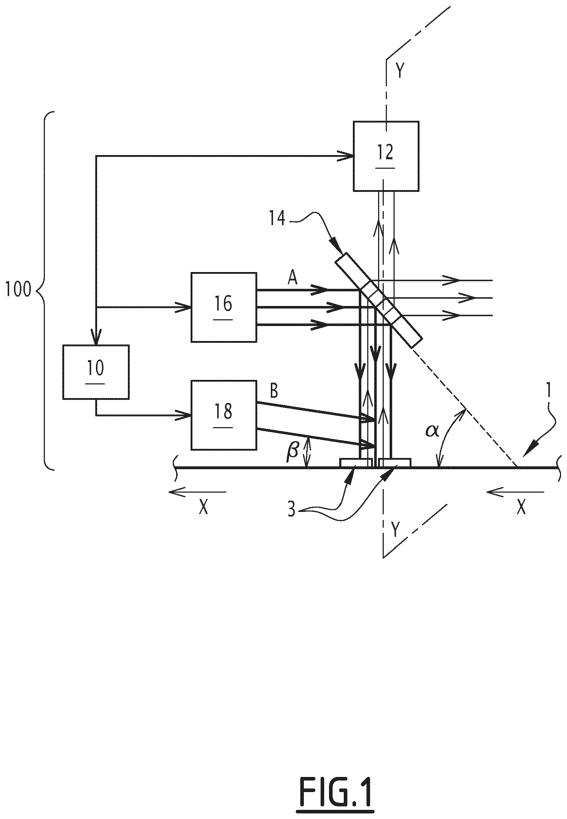

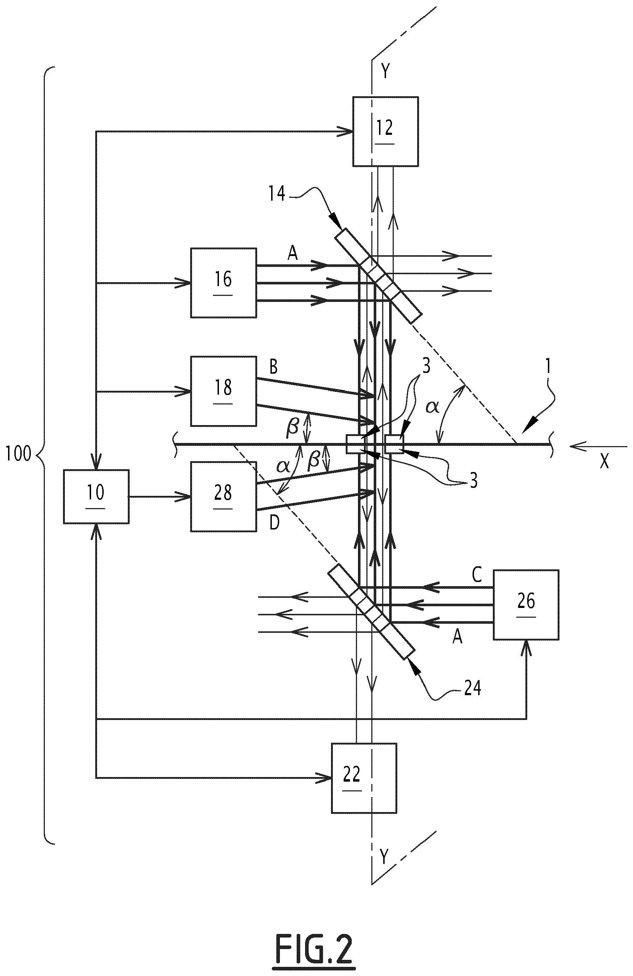

Further features and advantages of the invention will become apparent from the following detailed description, given by way of non-limiting example, with reference to the attached Figures 1 and 2 which schematically show, according to a side view, possible embodiments of an apparatus for controlling and detecting defects in an anode or cathode for batteries.

It should be noted that, identical or similar components, from a structural and/or functional point of view, could have same or different reference numbers in the following detailed description, regardless of whether they are illustrated in different embodiments or separate parts of the present invention.

It should also be noted that, in order to clearly and synthetically describe the present invention, the components illustrated may not be to scale and some features of the description may be illustrated in a somehow schematic form.

Moreover, when the term "adapted", or "configured", or "shaped", or a similar term is used in the present document, referring to any component as a whole, or to any part of a component or to a combination of components, it has to be intended that it means and correspondingly comprises the structure and/or the configuration and/or the shape and/or the positioning.

In particular, whenever such terms refer to hardware or software electronic means, they should be intended as including circuits or parts of electronic circuits, as well as software/firmware, such as algorithms, routines and programs in general, running and/or residing in any storage support.

In addition, when the term "about", or "substantial", or "substantially" is used herein, it should be intended as comprising a variation due to unavoidable manufacturing tolerances, or a current variation of more or less than 5% with respect to what is indicated as the reference value, direction or position.

Finally, in the following description and claims, the ordinal numbers first, second, etc., will be used for the sake of illustrative clarity and should not be intended as limiting for any reason, nor that the order should be exactly the one in the sequence described, with reference to the example embodiments described. For example, the indication of a first light beam, a second light beam, a third light beam, a fourth light beam does not imply that said beams are emitted in such a sequence, or that the light beams mentioned are necessarily present in every possible embodiment.

Figures 1 and 2 schematically show possible embodiments of an apparatus for controlling and detecting any defect in an anode or cathode for batteries, generally indicated with the reference number 100.

According to embodiments well known and for this reason not described herein in details, an anode or cathode for batteries comprises a continuous film 1 of electrically conducting material, e.g., copper or aluminum, which has a substantially planar shape and that is coated at least in part, and on both of its opposite faces, by a coating layer 3, e.g., graphite or other similar material, or in any case suitable for this purpose.

In practice, the film 1 is initially wound as a coil and it is unwound by sliding it during the production process and then wound again at the end of the manufacturing.

During manufacturing, more processes or production stages can be performed, among which the first is usually the deposition of graphite (or other similar material) with the associated drying.

Depending on the applications, for example based on the thickness and/or other factors, the graphite (or other similar material) can be printed, spread or dropped, and more layers of graphite (or of other similar material) can also be deposited.

Another step comprises for example the calendering where the material is pressed by passing between specific rolls.

In all the various processes or production stages an apparatus 100 according to the invention can be installed.

Depending on the applications, the coating layer 3 arranged on the faces of the conducting film 1 can be made by an entire sheet, or by separate parts of a proper geometry, e.g., slabs or bands of rectangular shape more or less elongated, patterns, i.e. small quadrangular shaped patches, etc.

Such coating layer is represented in Figure 1 by only one couple of substantially squared patches 3, represented for the sake of simplicity as arranged only on the upper face of film 1, while the coating layer is represented in Figure 2 by two couples of substantially squared patches in which one couple of patches 3 is arranged on the upper face of film 1, and the other couple of patches 3 is arranged on the opposite lower face of film 1.

As illustrated in Figure 1, the apparatus 100 according to the invention comprises at least:
- an electronic controlling unit or controller 10 (for the sake of simplicity below referred to as controller 10);
- at least a first device which is arranged along a path along which the anode or cathode to be controlled is passed and which comprises, arranged at a first face of the film 1, i.e. for example (with respect to film 1) on the upper half-plane as illustrated in Figure 1:
- a first Contact Image Sensor 12 (CIS);
- a first light beam splitter 14;
- a first illuminator 16; and
- a second illuminator 18.

In particular, the first illuminator 16 is configured to send on the first light beam splitter 14 first light beams A, and the first light beam splitter 14 is configured in order to deflect at least part of the emitted first light beams A towards a first face of the anode or cathode, e.g. the upper face.

As illustrated in the Figures, the deflected light beams impinge on the upper face of the anode or cathode by illuminating it, and they are reflected towards the first contact image sensor 12.

For example, the first illuminator 16 can be a LED illuminator with a diffuser, with parallel beam or with diffused light.

The second illuminator 18 is configured to send second light beams B substantially grazing toward said first face or upper face of the anode or cathode to be controlled.

The definition of grazing light beams is herein to be intended as including light beams which develop a properly chosen acute angle together with a plane of a face of the film 1.

For example, the second illuminator 18 can be of various types: with light at parallel beams, with diffused light or with focused light.

Conveniently, the at least one controller 10 is configured to drive the first illuminator 16 and the second illuminator 18 so that they emit respectively the first and second light beams A, B in a synchronized and alternating manner with each other.

The first contact image sensor 12 is configured to capture first and second images, e.g. interlaced or concatenated between each other, of at least a part of said first face of the anode or cathode when illuminated by said at least part of first deflected light beams A and from said second substantially gazing light beams B, respectively.

Usefully, the at least one controller 10 is configured to detect the presence of one or more defects which may be present on at least said first face of the anode or cathode at least based on said first and second images captured by the first contact image sensor 12.

For example, the first captured images are analyzed by the controller 10 to perform measurements of the anode or cathode which is being controlled, to detect geometric defects, for instance by assessing the correctness of the distance of the edge of the coating 3 on the upper face (or of each one of its components, be it a patch, or a rectangular lamina, etc.) from the edge of the underlying film 1, the mutual alignment between the components forming the coating layer 3 (be them patches, rectangular laminae arranged to form two or more lines, etc.).

For example, the second captured images are analyzed by the controller 10 to detect different types of defects of the anode or cathode that is being controlled, such as the presence of cracks, wrinkles, intrusions of other materials, depressions, smears, etc.

In a particularly preferred embodiment, illustrated in Figure 2, the apparatus 100 according to the invention further comprises a second device which is also arranged along the path along which the anode or cathode to be controlled is passed, and which comprises, arranged at a second face of film 1 opposite to the first face, i.e. for instance (with respect to the film 1) on the half-plane as illustrated in Figure 2:
- a second Contact Image Sensor 22 (CIS);
- a second light beam splitter 24;
- a third illuminator 26;
- a fourth illuminator 28.

In particular, the third illuminator 26 is configured so as to send on the first light beam splitter 14 third light beams C, and the second light beam splitter 24 is configured to deflect at least part of the third light beams C emitted towards a second face of the anode or cathode, e.g., the lower face.

As illustrated in the Figures, such deflected light beams impinge on the lower face of the anode or cathode by illuminating it, and they are reflected towards the second contact image sensor 22.

The fourth illuminator 28 is configured so as to send fourth substantially grazing light beams D towards the second face or lower face of the anode or cathode which is being controlled.

Conveniently, the at least one controller 10 is configured to drive the third illuminator 26 and the fourth illuminator 28 so that they emit the third and fourth light beams C and D in a synchronized and alternating manner with each other, respectively.

The second contact image sensor 22 is configured to capture third and fourth images, e.g., interlaced or concatenated with each other, of at least said second face of the anode or cathode when illuminated by said at least part of third deflected light beams C and said fourth substantially grazing light beams D, respectively.

Usefully, the at least one controller 10 is configured to detect the presence of one or more defects that may be present on at least said second face of the anode or cathode at least based on said third and fourth images captured by the second contact image sensor 22.

For example, the third images are used by the controller 10 to highlight the defects that may be present on the lower face of the anode or cathode which is being controlled, which are similar to the above indicated ones which can be detected by using the first images.

Similarly, the fourth images are used by the controller 10 for example to highlight the defects that may be present on the lower face of the anode or cathode which is being controlled, which are similar to the above indicated ones which can be detected by using the second images.

In a possible embodiment, the second device, as a whole and its components, is substantially identical to the first device and its corresponding components.

Advantageously, in a preferred embodiment of the apparatus 100 according to the invention, the at least one controller 10 is configured to detect the presence of at least one defect that may be present in the anode or cathode which is being controlled based on comparing the first and third images captured from the first contact image sensor 12 and from the second contact image sensor 22, respectively.

In particular, the at least one controller 10 is configured to verify if the components forming the coating layer 3 on the upper face of the film 1, being them a single sheet, patches, rectangular laminae etc., are substantially aligned each with a corresponding component (single coating sheet, patches, laminae, etc.) of the components forming the coating layer 3 on the lower face of the film 1.

In a possible embodiment, the at least one controller 10 is configured to drive at least one of said first illuminator 16 and third illuminator 26, preferably both, so that each one emits said first light beams A and respectively third light beams C, for a predetermined time interval comprised between 1µs and 30 µs, preferably between 10µs and 20 µs.

Conveniently, each of such time intervals is selectively modifiable in function of the applications so as to balance the need of proper production times with the need of effective detection of the first and third images.

In a possible embodiment, the at least one controller 10 is configured so to drive at least one of said second illuminator 18 and fourth illuminator 28, preferably both, so that each one emits said second light beams B and respectively said fourth light beams D, for a predetermined time interval comprised between 1µs and 30 µs, preferably between 10µs and 20 µs.

Conveniently, also each of such time intervals is selectively modifiable in function of the applications so as to balance the need of proper production times with the need of effective detection of the second and fourth images in which the apparatus 100 is used.

In particular, the first and second light beams A and B can be emitted alternatively and in sequence with each other substantially without any temporal break, or it is possible to include a temporal break between the two respective time intervals, which is selectable in function of the operating speed of the plant where the apparatus 100 is used.

In particular, the at least one controller 10 can be configured so as to drive the first and second illuminators 16, 18 in a synchronized and alternating manner with each other independently of the third and fourth illuminators 26, 28 or the at least one controller can be configured to drive simultaneously with each other the first and third illuminators 16, 26 and simultaneously with each other the second and fourth illuminators 18, 28.

In this last case, the controller 10 drives in a synchronized and alternating manner with each other the couples of illuminators 16-26 and 18-28.

In the embodiments illustrated in Figures 1 and 2, it is illustrated only one controller 10 associated to both devices.

Clearly, depending on the applications, it is possible to use two controllers 10 associated to a first or second device, respectively.

The or each controller 10 may comprise or be constituted by any device based on a processor, e.g., a microprocessor, a microcontroller, a microcomputer, a programmable logic controller of a commercially available type, properly programmed and provided to the necessary extent with circuits, in order to perform the innovative functionalities designed for the apparatus 100 according to the present invention.

The controller 10 can comprise other components, for example a storage unit, and it can be of the concentrated type, i.e. constituted by a single unit, or of the distributed type, i.e. constituted by two or more parts collaboratively associated with each other.

In a possible embodiment, at least one of said first contact image sensor 12 and second contact image sensor 22 is positioned so as to have the respective field of view arranged in a virtual plane substantially perpendicular to an X direction substantially rectilinear along which the anode or cathode to be controlled is passed.

Such a plane, represented as dashed in Figures 1 and 2 and therein indicated by the capital letter Y, is, for example, perpendicular to the plane of the sheets on which Figures 1 and 2 are represented.

In turn, the substantially rectilinear direction X along which the anode or cathode to be controlled is passed, is a direction which substantially parallel to or lying on the plane of the sheets.

Preferably, either the first contact image sensor 12 or the second contact image sensor 22 are positioned to have the respective field of view arranged on a virtual plane Y which is substantially perpendicular to the direction X along which the anode or cathode to be controlled is passed.

In particular, depending on the applications, the two contact image sensors 12 and 22 can be arranged with the respective field of view arranged in the same plane Y, or they can be shifted with each other, i.e. arranged on two respective virtual planes Y parallel to each other.

In this case, the distance between the two planes can be properly selected when installing the apparatus 100.

In a possible embodiment, at least one of said first light beam splitter 14 and second light beam splitter 24 is configured to deflect towards the anode or cathode which is being controlled, at least a percentage of the first light beams A or of the respective third light beams C emitted by the first illuminator 16 or respectively by the third illuminator 26 between 30% and 70%, preferably between 40% and 60%, more preferably about 50%.

Preferably, both said first light beam splitter 14 and second light beam splitter 24 are configured to deflect towards the anode or cathode which is being controlled, at least a percentage of the first light beams A or of the respective third light beams C emitted from the first illuminator 16 or respectively from the third illuminator 26 between 30% and 70%, preferably between 40% and 60%, more preferably about 50%.

In a possible embodiment, at least one of said first light beam splitter 14 and second light beam splitter 24 comprises an at least partially reflective surface which develops according to an inclined plane forming with the film 1 a respective acute angle α comprised between 30° and 70°, preferably between 40° and 60°, more preferably of about 45°.

Preferably, both said first light beam splitter 14 and second light beam splitter 24 comprise both an at least partially reflective surface which develops according to an inclined plane forming with the film 1 a respective acute angle α comprised between 30° and 70°, preferably between 40° and 60°, more preferably of about 45°.

In a possible embodiment, at least one of said second illuminator 18 and fourth illuminator 28 is configured to send said second light beams B and respectively fourth substantially grazing light beams D towards the anode or cathode to be controlled, inclined with respect to the film 1 by an acute angle β comprised between 5° and 30°, preferably between 8° and 20°, more preferably of about 15°.

Preferably, both said second illuminator 18 and fourth illuminator 28 are configured to send said second light beams B and respectively fourth substantially grazing light beams D towards the anode or cathode to be controlled, inclined with respect to the film 1 by an acute angle β comprised between 5° and 30°, preferably between 8° and 20°, more preferably of about 15°.

In a possible embodiment, e.g., depending on the width of the anode or cathode to be controlled, which can usually range between 300mm and 1700mm, the first device can comprise two first contact image sensors 12 (the second of which is not illustrated in the Figures) e.g., identical with each other and arranged at a first face of the film 1, e.g., they are smaller than a first contact image sensor when used alone.

The two first contact image sensors 12 can be arranged next to each other or in any proper reciprocal position with each other, so that the sum of their respective fields of view covers the desired width of the anode or cathode to be controlled, and that both of them will capture respectively first and second images of the portions of the first face of the anode or cathode assigned to each of them when the first face is illuminated by said at least part of the first light beams A deflected and by said second light beams B, respectively.

In particular, in this embodiment it is possible to use a single first light beam splitter 14 properly positioned to deflect at least part of said first light beams A toward said first face of the anode or cathode which are then reflected towards both of the two first contact image sensors 12, or it is possible to use two first light beam splitters 14, each of them associated with a respective first contact image sensor 12.

Similarly, the second device can comprise, arranged at a first face of the film 1, two second contact image sensors 22 (the second of which is not illustrated in the Figures), for example substantially identical with each other, e.g., smaller than a second contact image sensor when used alone.

The two second contact image sensors 22 can be arranged next to each other or in any proper position reciprocal with each other so that the sum of their respective fields of view covers the desired width of the anode or cathode to be controlled, and that both of them will capture respective third and fourth images of the portions of said second face of the anode or cathode assigned to each of them when the second face is illuminated by said at least part of the third light beams C deflected and said fourth light beams D, respectively.

Also in the second device it is possible to use a single second light beam splitter 24 properly positioned to deviate at least part of said third light beams C toward said second face of the anode or cathode which are then reflected towards both the two second contact image sensors 22, or it is possible to use two second light beam splitters 24 each of them associated to a respective second contact image sensor 22.

Clearly, in the attached Figures, the various components of the apparatus are represented in a schematical manner for the sake of illustrative clarity. Their dimensions, the positioning with each other and with respect to the anode or cathode to be controlled, e.g., the distance from the anode and cathode, may be properly varied in function of the applications.

For example, in Figures 1 and 2 the first illuminator 16 and the second illuminator 18 are illustrated as positioned on the same side with respect to the first light beam splitter 14, but they may be arranged on opposite sides with respect to it, e.g., as illustrated for the third illuminator 26 and the fourth illuminator 28 with respect to the second light beam splitter 24.

Practically, it has been evidenced that the apparatus 100 according to the invention suitably fulfills the intended scope, since it allows to effectively detect defects in the production of anodes and cathodes for batteries.

Moreover, the apparatus 100 has a structure which makes it suitable for being used either in new plants, or in already operating plants for the production of batteries, and/or of anodes and/or cathodes for batteries.

In such plants it is possible to use more apparatuses 100 at a certain distance and functionally separated with each other and distributed along different controlling units of the plant.

Of course, given the principle of the invention, the embodiments and their particulars can be widely varied with respect to what has been described and illustrated by way of non-limiting examples only, without stepping outside the scope of protection of the present invention, defined by the attached claims, comprising any possible, also partial, combination of the above-described embodiments. For example, the or each contact image sensor may comprise or be constituted by any CIS which is available on the market and suitable for being used in the apparatus 100; the components illustrated in the Figures can be positioned in a different way with respect to what has been shown, as long as it is compatible with the scope for which they are intended to be used in the frame of the invention, etc.

## Claims

1. Apparatus (100) for detecting defects in an anode or cathode for batteries, said anode or cathode comprising a film (1) of electrically conducting material coated at least in part, and on both of its opposite faces, by a coating layer (3), the apparatus (100) comprising:
- - at least one controller (10);
- - at least a first device which is arranged along a path along which said anode or cathode to be controlled is passed and which comprises, arranged at a first face of the film (1):
- a first contact image sensor (12);
- a first light beam splitter (14);
- a first illuminator (16) which is configured to send on said first light beam splitter (14) first light beams (A), said first light beam splitter (14) being configured to deflect at least part of said first light beams (A) towards said first face of the anode or cathode;
being **characterised in that** it further comprises:
- a second illuminator (18) configured to send second beams (B) of substantially grazing light toward said first face of the anode or cathode;
- wherein said at least one controller (10) is configured to drive said first and second illuminators (16, 18) so that they emit said first and second light beams (A, B) in a synchronized and alternating manner with each other;
wherein said at least one controller (10) is configured to drive said first and second illuminators (16, 18) so that they emit said first and second light beams (A, B) in a synchronized and alternating manner with each other;
wherein said first contact image sensor (12) is configured to capture first and second images of at least part of said first face of the anode or cathode when illuminated by said at least part of said first light beams (A) deflected and said second light beams (B), respectively;
and wherein said at least one controller (10) is configured to detect the presence of one or more defects that may be present on at least said first face of said anode or cathode at least based on said first and second images captured by said first contact image sensor (12).

2. Apparatus (100) according to claim 1, further comprising at least a second device which is arranged along a path along which said anode or cathode to be controlled is passed and which comprises, arranged at a second face of the film (1) opposite to the first face:
- a second contact image sensor (22);
- a second light beam splitter (24);
- a third illuminator (26) which is configured to send on said second light beam splitter (24) third light beams (C), said second light beam splitter (24) being configured to deflect at least part of said third light beams (C) towards said second face of the anode or cathode;
- a fourth illuminator (28) configured to send fourth beams (D) of substantially grazing light toward said second face of the anode or cathode;
wherein said at least one controller (10) is configured to drive said third and fourth illuminators (26, 28) so that they emit said third and fourth light beams (C, D) in a synchronized and alternating manner with each other;
wherein said at least one controller (10) is configured to drive said third and fourth illuminators (26, 28) so that they emit said third and fourth light beams (C, D) in a synchronized and alternating manner with each other;
wherein said second contact image sensor (22) is configured to capture third and fourth images of at least part of said second face of the anode or cathode when illuminated by said at least part of said third light beams (C) deflected and said fourth light beams (D), respectively;
and wherein said at least one controller (10) is configured to detect the presence of one or more defects that may be present on at least said second face of said anode or cathode at least based on said third and fourth images captured by said second contact image sensor (22).

3. Apparatus (100) according to claim 2, wherein said at least one controller (10) is configured to detect the presence of at least one defect that may be present in said anode or cathode based on comparing said first and third images captured by said first contact image sensor (12) and said second contact image sensor (22), respectively.

4. Apparatus (100) according to one or more of the preceding claims, wherein at least one of said first contact image sensor (12) and second contact image sensor (22) is positioned so as to have the respective field of view arranged in a virtual plane (Y) substantially perpendicular to a direction (X) substantially rectilinear along which said anode or cathode to be controlled is passed.

5. Apparatus (100) according to one or more of the preceding claims, wherein at least one of said first light beam splitter (14) and second light beam splitter (24) is configured to deflect toward said anode or cathode at least a percentage of the first light beams (A) or third light beams (C) emitted respectively by the first illuminator (16) or by the third illuminator (26) between 30% and 70%, preferably between 40% and 60%, more preferably about 50%.

6. Apparatus (100) according to one or more of the preceding claims, wherein at least one of said first light beam splitter (14) and second light beam splitter (24) comprises an at least partially reflective surface which develops according to an inclined plane forming with said film (1) a respective acute angle (α) comprised between 30° and 70°, preferably between 40° and 60°, more preferably of about 45°.

7. Apparatus (100) according to one or more of the preceding claims, wherein at least one of said second illuminator (18) and fourth illuminator (28) is configured to send said second beams (B) and respectively fourth beams (D) of substantially grazing light toward said anode or cathode, inclined with respect to the film (1) by an acute angle (β) comprised between 5° and 30°, preferably between 8° and 20°, more preferably about 15°.

8. Apparatus (100) according to one or more of the preceding claims, wherein said at least one controller (10) is configured to drive at least one of said first illuminator (16) and third illuminator (26) to emit said first light beams (A) and respectively said third light beams (C) for a time interval comprised between 1µs and 30 µs, preferably between 10µs and 20 µs.

9. Apparatus (100) according to one or more of the preceding claims, wherein said at least one controller (10) is configured to drive at least one of said second illuminator (18) and fourth illuminator (28) to emit said second light beams (B) and respectively said fourth light beams (D) for a time interval comprised between 1µs and 30 µs, preferably between 10µs and 20 µs.

10. Apparatus (100) according to one or more of the preceding claims, wherein said first device further comprises at least one additional first contact image sensor (12) configured to capture respective first and second images of at least part of said first face of the anode or cathode when illuminated by said at least part of said first light beams (A) deflected and said second light beams (B), respectively.

11. Apparatus (100) according to one or more of claims 2 to 10, wherein said second device further comprises at least one additional second contact image sensor (22) configured to capture respective third and fourth images of at least part of said second face of the anode or cathode when illuminated by said at least part of said third light beams (C) deflected and said fourth light beams (D), respectively.

12. Plant for producing batteries, and/or anodes and/or cathodes for batteries, **characterized in that** it comprises at least one apparatus (100) according to one or more of the preceding claims.

## Patentansprüche

1. Gerät (100) zum Erkennen von Defekten in einer Anode oder Kathode für Batterien, die Anode oder Kathode umfassend einen Film (1) aus elektrisch leitendem Material, der mindestens teilweise und auf beiden seiner gegenüberliegenden Seiten mit einer Beschichtungsschicht (3) überzogen ist, das Gerät (100) umfassend:
- mindestens eine Steuerung (10);
- mindestens eine erste Vorrichtung, die entlang einer Bahn angeordnet ist, entlang derer die zu kontrollierende Anode oder Kathode vorbeigeführt wird, und die angeordnet an einer ersten Seite des Films (1) Folgendes umfasst:
- einen ersten Kontaktbildsensor (12);
- einen ersten Lichtstrahlteiler (14);
- eine erste Lichtquelle (16), die konfiguriert ist, um erste Lichtstrahlen (A) auf den ersten Lichtstrahlteiler (14) zu senden, wobei der erste Lichtstrahlteiler (14) konfiguriert ist, um mindestens einen Teil der ersten Lichtstrahlen (A) in Richtung der ersten Seite der Anode oder Kathode abzulenken;
**dadurch gekennzeichnet, dass** es ferner Folgendes umfasst:
- eine zweite Lichtquelle (18), die konfiguriert ist, um zweite Lichtstrahlen (B) aus im Wesentlichen Streiflicht in Richtung der ersten Seite der Anode oder Kathode zu senden;
- wobei die mindestens eine Steuerung (10) konfiguriert ist, um die erste und die zweite Lichtquelle (16, 18) anzusteuern, sodass sie den ersten und den zweiten Lichtstrahl (A, B) synchron und auf miteinander abwechselnde Weise emittieren;
wobei die mindestens eine Steuerung (10) konfiguriert ist, um die erste und die zweite Lichtquelle (16, 18) anzusteuern, sodass sie den ersten und den zweiten Lichtstrahl (A, B) synchron und auf miteinander abwechselnde Weise emittieren;
wobei der erste Kontaktbildsensor (12) konfiguriert ist, um ein erstes und ein zweites Bild von mindestens einem Teil der ersten Seite der Anode oder Kathode aufzunehmen, wenn sie von mindestens einem Teil der abgelenkten ersten Lichtstrahlen (A) bzw. der zweiten Lichtstrahlen (B) beleuchtet wird;
und wobei die mindestens eine Steuerung (10) konfiguriert ist, um das Vorhandensein eines oder mehrerer Defekte, die mindestens auf der ersten Seite der Anode oder Kathode vorhanden sein können, mindestens basierend auf dem ersten und dem zweiten Bild, die von dem ersten Kontaktbildsensor (12) aufgenommen werden, zu erkennen.

2. Gerät (100) nach Anspruch 1, ferner umfassend mindestens eine zweite Vorrichtung, die entlang einer Bahn angeordnet ist, entlang derer die zu steuernde Anode oder Kathode vorbeigeführt wird, und die angeordnet an einer zweiten Seite des Films (1) gegenüber der ersten Seite Folgendes umfasst:
- einen zweiten Kontaktbildsensor (22);
- einen zweiten Lichtstrahlteiler (24);
- eine dritte Lichtquelle (26), die konfiguriert ist, um dritte Lichtstrahlen (C) auf den zweiten Lichtstrahlteiler (24) zu senden, wobei der zweite Lichtstrahlteiler (24) konfiguriert ist, um mindestens einen Teil der dritten Lichtstrahlen (C) in Richtung der zweiten Seite der Anode oder Kathode abzulenken;
- eine vierte Lichtquelle (28), die konfiguriert ist, um vierte Lichtstrahlen (D) aus im Wesentlichen Streiflicht in Richtung der zweiten Seite der Anode oder Kathode zu senden;
wobei die mindestens eine Steuerung (10) konfiguriert ist, um die dritte und die vierte Lichtquelle (26, 28) anzusteuern, sodass sie den dritten und den vierten Lichtstrahl (C, D) synchron und auf miteinander abwechselnde Weise emittieren;
wobei der zweite Kontaktbildsensor (22) konfiguriert ist, um ein drittes und ein viertes Bild von mindestens einem Teil der zweiten Seite der Anode oder Kathode aufzunehmen, wenn sie von mindestens einem Teil der abgelenkten dritten Lichtstrahlen (C) bzw. der vierten Lichtstrahlen (D) beleuchtet wird;
und wobei die mindestens eine Steuerung (10) konfiguriert ist, um das Vorhandensein eines oder mehrerer Defekte, die mindestens auf der zweiten Seite der Anode oder Kathode vorhanden sein können, mindestens basierend auf dem dritten und dem vierten Bild, die von dem zweiten Kontaktbildsensor (22) aufgenommen werden, zu erkennen.

3. Gerät (100) nach Anspruch 2, wobei die mindestens eine Steuerung (10) konfiguriert ist, um das Vorhandensein mindestens eines Defekts, der in der Anode oder Kathode vorhanden sein kann, basierend auf einem Vergleich des ersten und des dritten Bilds zu erkennen, die von dem ersten Kontaktbildsensor (12) bzw. dem zweiten Kontaktbildsensor (22) aufgenommen werden.

4. Gerät (100) nach einem oder mehreren der vorherigen Ansprüche, wobei mindestens einer von dem ersten Kontaktbildsensor (12) und dem zweiten Kontaktbildsensor (22) positioniert ist, damit sein jeweiliges Sichtfeld in einer virtuellen Ebene (Y) im Wesentlichen senkrecht zu einer im Wesentlichen geradlinigen Richtung (X), entlang derer die zu steuernde Anode oder Kathode vorbeigeführt wird, angeordnet ist.

5. Gerät (100) nach einem oder mehreren der vorherigen Ansprüche, wobei mindestens einer von dem ersten Lichtstrahlteiler (14) und dem zweiten Lichtstrahlteiler (24) konfiguriert ist, um mindestens einen Prozentsatz der ersten Lichtstrahlen (A) oder der dritten Lichtstrahlen (C), die jeweils von der ersten Lichtquelle (16) oder von der dritten Lichtquelle (26) emittiert werden, in Richtung der Anode oder Kathode, zwischen 30 % und 70 %, vorzugsweise zwischen 40 % und 60 %, bevorzugter etwa 50 %, abzulenken.

6. Gerät (100) nach einem oder mehreren der vorherigen Ansprüche, wobei mindestens einer von dem ersten Lichtstrahlteiler (14) und dem zweiten Lichtstrahlteiler (24) eine mindestens teilweise reflektierende Oberfläche umfasst, die gemäß einer schrägen Ebene verläuft, und mit dem Film (1) einen jeweiligen spitzen Winkel (α) zwischen 30° und 70°, vorzugsweise zwischen 40° und 60°, bevorzugter von etwa 45° bildet.

7. Gerät (100) nach einem oder mehreren der vorherigen Ansprüche, wobei mindestens eine von der zweiten Lichtquelle (18) und der vierten Lichtquelle (28) konfiguriert ist, um die zweiten Strahlen (B) und die jeweils vierten Strahlen (D) aus im Wesentlichen Streiflicht in Richtung der Anode oder Kathode zu senden, die in Bezug auf den Film (1) unter einem spitzen Winkel (β) geneigt sind, der zwischen 5° und 30°, vorzugsweise zwischen 8° und 20°, bevorzugter bei etwa 15° liegt.

8. Gerät (100) nach einem oder mehreren der vorherigen Ansprüche, wobei die mindestens eine Steuerung (10) konfiguriert ist, um mindestens eine von der ersten Lichtquelle (16) und der dritten Lichtquelle (26) anzusteuern, um die ersten Lichtstrahlen (A) und jeweils dritten Lichtstrahlen (C) über ein Zeitintervall zwischen 1 µs und 30 µs, vorzugsweise zwischen 10 µs und 20 µs, zu emittieren.

9. Gerät (100) nach einem oder mehreren der vorherigen Ansprüche, wobei die mindestens eine Steuerung (10) konfiguriert ist, um mindestens eine von der zweiten Lichtquelle (18) und der vierten Lichtquelle (28) anzusteuern, um die zweiten Lichtstrahlen (B) und jeweils vierten Lichtstrahlen (D) über ein Zeitintervall zwischen 1 µs und 30 µs, vorzugsweise zwischen 10 µs und 20 µs, zu emittieren.

10. Gerät (100) nach einem oder mehreren der vorherigen Ansprüche, wobei die erste Vorrichtung ferner mindestens einen zusätzlichen ersten Kontaktbildsensor (12) umfasst, der konfiguriert ist, um ein jeweiliges erstes und zweites Bild von mindestens einem Teil der ersten Seite der Anode oder Kathode aufzunehmen, wenn sie von mindestens einem Teil der abgelenkten ersten Lichtstrahlen (A) bzw. der zweiten Lichtstrahlen (B) beleuchtet wird.

11. Gerät (100) nach einem oder mehreren der Ansprüche 2 bis 10, wobei die zweite Vorrichtung ferner mindestens einen zusätzlichen zweiten Kontaktbildsensor (22) umfasst, der konfiguriert ist, um ein jeweiliges drittes und viertes Bild von mindestens einem Teil der zweiten Seite der Anode oder Kathode aufzunehmen, wenn sie von mindestens einem Teil der abgelenkten dritten Lichtstrahlen (C) bzw. der vierten Lichtstrahlen (D) beleuchtet wird.

12. Anlage zum Herstellen von Batterien und/oder Anoden und/oder Kathoden für Batterien, **dadurch gekennzeichnet, dass** sie mindestens ein Gerät (100) nach einem oder mehreren der vorherigen Ansprüche umfasst.

## Revendications

1. Appareil (100) destiné à la détection de défauts dans une anode ou une cathode de batterie, ladite anode ou cathode comprenant un film (1) en matériau électriquement conducteur recouvert, au moins en partie et sur ses deux faces opposées, d'une couche de revêtement (3), l'appareil (100) comprenant :
- au moins un contrôleur (10) ;
- au moins un premier dispositif disposé le long d'un trajet sur lequel passe ladite anode ou cathode à contrôler, et qui comprend, disposé sur une première face du film (1) :
- un premier capteur d'image par contact (12) ;
- un premier séparateur de faisceau lumineux (14) ;
- un premier dispositif d'éclairage (16) conçu pour envoyer, sur ledit premier séparateur de faisceaux lumineux (14), des premiers faisceaux lumineux (A), ledit premier séparateur de faisceaux lumineux (14) étant conçu pour dévier au moins une partie desdits premiers faisceaux lumineux (A) vers ladite première face de l'anode ou de la cathode ;
étant **caractérisé en ce qu'**il comprend en outre : |
- un deuxième dispositif d'éclairage (18) configuré pour envoyer des deuxièmes faisceaux (B) de lumière sensiblement rasante vers ladite première face de l'anode ou de la cathode ;
- dans lequel ledit au moins un contrôleur (10) est configuré pour entraîner lesdits premier et deuxième dispositifs d'éclairage (16, 18) de manière à ce qu'ils émettent lesdits premier et deuxième faisceaux lumineux (A, B) de façon synchronisée et en alternance l'un par rapport à l'autre ;
dans lequel ledit au moins un contrôleur (10) est configuré pour entraîner lesdits premier et deuxième dispositifs d'éclairage (16, 18) de manière à ce qu'ils émettent lesdits premier et deuxième faisceaux lumineux (A, B) de façon synchronisée et en alternance l'un par rapport à l'autre ;
dans lequel ledit premier capteur d'images par contact (12) est configuré pour capturer une première et une deuxième images d'au moins une partie de ladite première face de l'anode ou de la cathode lorsqu'elle est éclairée respectivement par ladite au moins une partie desdits premiers faisceaux lumineux (A) déviés et desdits deuxièmes faisceaux lumineux (B) ;
et dans lequel ledit au moins un contrôleur (10) est configuré pour détecter la présence d'un ou plusieurs défauts susceptibles d'apparaître sur au moins ladite première face de ladite anode ou cathode, au moins sur la base desdites première et deuxième images capturées par ledit premier capteur d'images par contact (12).

2. Appareil (100) selon la revendication 1, comprenant en outre au moins un deuxième dispositif disposé le long d'un trajet sur lequel passe ladite anode ou cathode à contrôler, et qui comprend, disposé sur une deuxième face du film (1) opposée à la première face :
- un deuxième capteur d'image par contact (22) ;
- un deuxième séparateur de faisceau lumineux (24) ;
- un troisième dispositif d'éclairage (26) conçu pour envoyer, sur ledit deuxième séparateur de faisceaux lumineux (24), des troisièmes faisceaux lumineux (C), ledit deuxième séparateur de faisceaux lumineux (24) étant conçu pour dévier au moins une partie desdits troisièmes faisceaux lumineux (C) vers ladite deuxième face de l'anode ou de la cathode ;
- un quatrième dispositif d'éclairage (28) configuré pour envoyer des quatrièmes faisceaux (D) de lumière sensiblement rasante vers ladite deuxième face de l'anode ou de la cathode ;
dans lequel ledit au moins un contrôleur (10) est configuré pour entraîner lesdits troisième et quatrième dispositifs d'éclairage (26, 28) de manière à ce qu'ils émettent lesdits troisième et quatrième faisceaux lumineux (C, D) de façon synchronisée et en alternance l'un par rapport à l'autre ;
dans lequel ledit au moins un contrôleur (10) est configuré pour commander lesdits troisième et quatrième dispositifs d'éclairage (26, 28) de manière à ce qu'ils émettent lesdits troisième et quatrième faisceaux lumineux (C, D) de façon synchronisée et en alternance l'un par rapport à l'autre ;
dans lequel ledit deuxième capteur d'images par contact (22) est configuré pour capturer des troisième et quatrième images d'au moins une partie de ladite deuxième face de l'anode ou de la cathode lorsqu'elle est éclairée respectivement par ladite au moins une partie desdits troisièmes faisceaux lumineux (C) déviés et desdits quatrièmes faisceaux lumineux (D) ;
et dans lequel ledit au moins un contrôleur (10) est configuré pour détecter la présence d'un ou plusieurs défauts susceptibles d'apparaître sur au moins ladite deuxième face de ladite anode ou cathode, au moins sur la base desdites troisième et quatrième images capturées par ledit deuxième capteur d'images par contact (22).

3. Appareil (100) selon la revendication 2, dans lequel ledit au moins un contrôleur (10) est configuré pour détecter la présence d'au moins un défaut susceptible d'être présent dans ladite anode ou ladite cathode, en comparant lesdites première et troisième images capturées respectivement par ledit premier capteur d'image par contact (12) et ledit deuxième capteur d'image par contact (22).

4. Appareil (100) selon une ou plusieurs des revendications précédentes, dans lequel au moins l'un parmi ledit premier capteur d'image par contact (12) et ledit deuxième capteur d'image par contact (22) est positionné de telle sorte que son champ de vision respectif soit disposé dans un plan virtuel (Y) sensiblement perpendiculaire à une direction (X) sensiblement rectiligne le long de laquelle passe ladite anode ou cathode à commander.

5. Appareil (100) selon une ou plusieurs des revendications précédentes, dans lequel au moins l'un parmi ledit premier séparateur de faisceaux lumineux (14) et ledit deuxième séparateur de faisceaux lumineux (24) est configuré pour dévier vers ladite anode ou ladite cathode au moins un pourcentage des premiers faisceaux lumineux (A) ou des troisièmes faisceaux lumineux (C) émis respectivement par le premier dispositif d'éclairage (16) ou par le troisième dispositif d'éclairage (26), compris entre 30 % et 70 %, de préférence entre 40 % et 60 %, et plus encore de préférence d'environ 50 %.

6. Appareil (100) selon une ou plusieurs des revendications précédentes, dans lequel au moins l'un dudit premier séparateur de faisceau lumineux (14) et dudit deuxième séparateur de faisceau lumineux (24) comprend une surface au moins partiellement réfléchissante qui s'étend selon un plan incliné formant avec ledit film (1) un angle aigu (α) compris entre 30° et 70°, de préférence entre 40° et 60°, et plus encore de préférence d'environ 45°.

7. Appareil (100) selon une ou plusieurs des revendications précédentes, dans lequel au moins l'un parmi ledit deuxième dispositif d'éclairage (18) et ledit quatrième dispositif d'éclairage (28) est configuré pour envoyer lesdits deuxièmes faisceaux (B) et, respectivement, lesdits quatrièmes faisceaux (D) de lumière sensiblement rasante vers ladite anode ou cathode, inclinés par rapport au film (1) d'un angle aigu (β) compris entre 5° et 30°, de préférence compris entre 8° et 20°, et plus encore de préférence d'environ 15°.

8. Appareil (100) selon une ou plusieurs des revendications précédentes, dans lequel ledit au moins un contrôleur (10) est configuré pour commander au moins l'un dudit premier dispositif d'éclairage (16) et dudit troisième dispositif d'éclairage (26) afin qu'ils émettent respectivement lesdits premiers faisceaux lumineux (A) et lesdits troisièmes faisceaux lumineux (C) pendant un intervalle de temps compris entre 1 µs et 30 µs, de préférence entre 10 µs et 20 µs.

9. Appareil (100) selon une ou plusieurs des revendications précédentes, dans lequel ledit au moins un contrôleur (10) est configuré pour commander au moins l'un dudit premier dispositif d'éclairage (18) et dudit troisième dispositif d'éclairage (28) afin qu'ils émettent respectivement lesdits premiers faisceaux lumineux (A) et lesdits troisièmes faisceaux lumineux (C) pendant un intervalle de temps compris entre 1 µs et 30 µs, de préférence entre 10 µs et 20 µs.

10. Appareil (100) selon une ou plusieurs des revendications précédentes, dans lequel ledit premier appareil comprend en outre au moins un premier capteur d'images par contact (12) supplémentaire configuré pour capturer une première et une deuxième images d'au moins une partie de ladite première face de l'anode ou de la cathode lorsqu'elle est éclairée respectivement par ladite au moins une partie desdits premiers faisceaux lumineux (A) déviés et desdits deuxièmes faisceaux lumineux (B).

11. Appareil (100) selon une ou plusieurs des revendications 2 à 10, dans lequel ledit deuxième appareil comprend en outre au moins un deuxième capteur d'images par contact (22) supplémentaire configuré pour capturer des troisième et quatrième images d'au moins une partie de ladite deuxième face de l'anode ou de la cathode lorsqu'elle est éclairée respectivement par ladite au moins une partie desdits troisièmes faisceaux lumineux (A) déviés et desdits quatrièmes faisceaux lumineux (B).

12. Installation destinée à la fabrication de batteries et/ou d'anodes et/ou de cathodes pour batteries, **caractérisée en ce qu'**elle comprend au moins un dispositif (100) selon une ou plusieurs des revendications précédentes.
